Europäisches Patentamt

European Patent Office

Office européen des brevets

(11) Publication number: 0 402 333
A2

# EUROPEAN PATENT APPLICATION

(21) Application number: 90850171.1

(22) Date of filing: 10.05.90

(51) Int. Cl.⁵: **F16J 15/40**

(30) Priority: 05.06.89 SE 8902033

(43) Date of publication of application:
12.12.90 Bulletin 90/50

(84) Designated Contracting States:
**DE FR GB IT**

(71) Applicant: **SKF Nova AB**

**S-415 50 Göteborg(SE)**

(72) Inventor: **Adolfsson, Rune**

Bandholzgatan 35
S-43252 Varberg(SE)
Inventor: **Berggren, Jan**
Apelsingatan 29
S-42154 V. Frölunda(SE)
Inventor: **Lindsten, Göran**
Torsgatan 25
S-43238 Mölndal(SE)

(74) Representative: **Forsberg, Lars-Ake et al**
**SKF NOVA AB Patent Department**
**S-415 50 Göteborg(SE)**

(54) **A device in thrust and angular contact bearings.**

(57) A device in thrust or angular contact bearings of sliding bearing type incorporating a rotary portion (1), a bearing cup (2) and a lubricant supplied therebetween. According to the invention is proposed a sliding bearing which provides an efficient lubrication and wherein leakage of lubricant is avoided. This has been achieved in that a sliding washer (3) of magnetisable material is provided between the rotary portion (1) and the bearing cup (2), whereby the lubricant is constituted by a magnetic fluid, and that the sliding washer (3) is magnetised in such a pattern that the lubricant is distributed over and retained on the sliding surface of the sliding washer.

## FIG.1

EP 0 402 333 A2

## A device in thrust and angular contact bearings

The present invention refers to a device in thrust or angular contact bearings of sliding bearing type, incorporating a rotary portion, a bearing cup and a lubricant supplied therebetween.

#### Background of the invention

In conventional bearings of this type there is problems in retaining the oil in the bearing. Insufficient lubrication causes increased wear and reduces the service life of the bearing. Sometimes an oil pump is used for bringing back the oil into the bearing. This however is complicated and expensive. It is also known to provide the sliding bearing with helical grooves for the oil in order to reduce the friction. The drawback of this solution is however that the bearing is rotatable in one direction only.

#### Purpose and most essential features of the invention

The purpose of the present invention is to provide a sliding bearing of the type mentioned initially, which provides an efficient lubrication and wherein the leakage problem has been reduced or eliminated. According to the invention this has been solved in that a sliding washer of magnetisable material is provided between the rotary portion and the bearing cup, whereby the lubricant is constituted by a magnetic fluid, and that the sliding washer is magnetised in such a pattern that the lubricant is distributed over and retained on the sliding surface of the sliding washer.

#### Description of the drawings

Hereinafter the invention will be further described with reference to some embodiments shown in the accompanying drawings.

Fig. 1 is a schematic section through a thrust bearing according to the invention.

Fig. 2 shows in perspective a sliding washer according to one embodiment.

Fig. 3 is a schematical section through an angular contact bearing.

Fig. 4 shows in a view from above a sliding washer according to a second embodiment.

Fig. 5 shows a section through an angular contact bearing according to a modified embodiment.

Fig. 6 is a section through further an embodiment of an angular contact bearing.

#### Description of embodiments

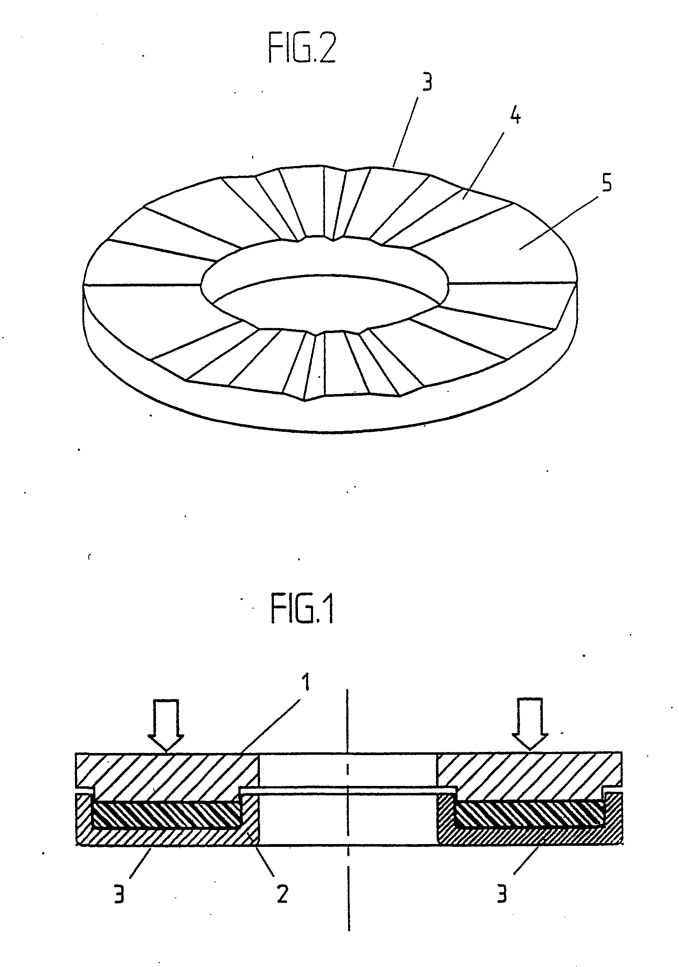

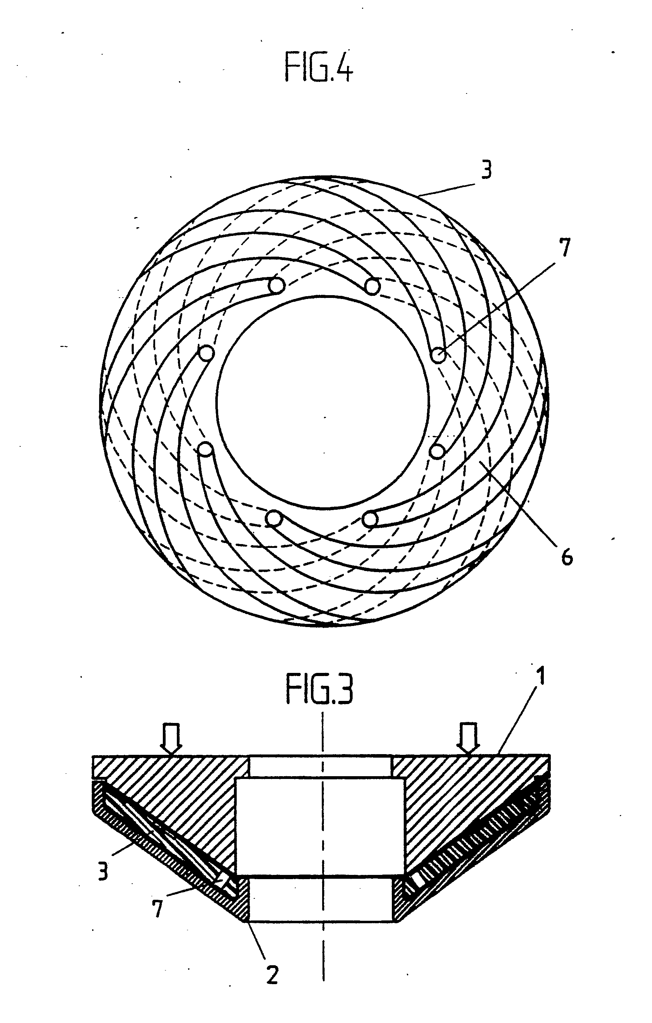

With reference to Fig. 1 and 3, which show a thrust bearing and an angular contact bearing resp., the rotary portion is designated 1, the bearing cup 2 and a sliding washer provided therebetween 3. The sliding washer 3 is of magnetisable material, e.g. plastics or rubber, wherein have been embedded particles of magnetisable material, e.g. magnetite, or magnetic sheet metal with a wear resistant surface layer. The sliding washer 3 is provided with a lubricant in form of a magnetic fluid, a so called "ferro-fluid", i.e. a colloidal dispersion of tiny magnetic particles in a carrier fluid, e.g. oil. The magnetic particles are kept in stable colloidal dispersion by means of a dispersant. Such magnetic fluids can be introduced into and retained in spaces by means of a magnetic field.

The sliding washer 3 may have different designs and it may be magnetised in different ways. The sliding washer shown in Fig. 2 has radial wedge-formed grooves 4. Rotation is permitted in both directions with this washer 3. The washer 3 may be magnetised in a linear pattern with poles on the flat supporting surfaces 5. This gives an accumulation of the magnetic oil to the flat surfaces 5 of the washer 3, but when subjected to load, the oil will be urged along in the grooves 4 and contribute to a hydrostatic pressure increase therein. Due to the shape of the grooves 4 a wedge-shaped oil film is created therein at rotation, which will give the bearing a hydrodynamic carrying capacity.

As an alternative the washer may be magnetised in the grooves 4 in order to retain the oil therein. A further alternative is to magnetise the washer in a square-pattern for distributing the oil over the surface with concentration at the intersections of the square-pattern.

Preferably the washer 3 has a certain elasticity for obtaining a better lubricating film and a compensation of tolerances. The washer may be reinforced by having e.g. a steel plate embedded in order to obtain a higher strength against overload.

The sliding washer 3 shown in Fig. 4 has radial helical grooves 6 on both sides, whereby the grooves 6 on one side are arranged in opposed direction as compared to those on the other side. Therefore the bearing may be rotated in one direc-

# EP 0 402 333 A2

tion on one side of the washer 3 and in the opposite direction on the other side. The grooves 6 on both sides of the washer communicate with each other via openings 7 through which the oil may pass. The washer 3 also in this case may be magnetised in the different ways mentioned above.

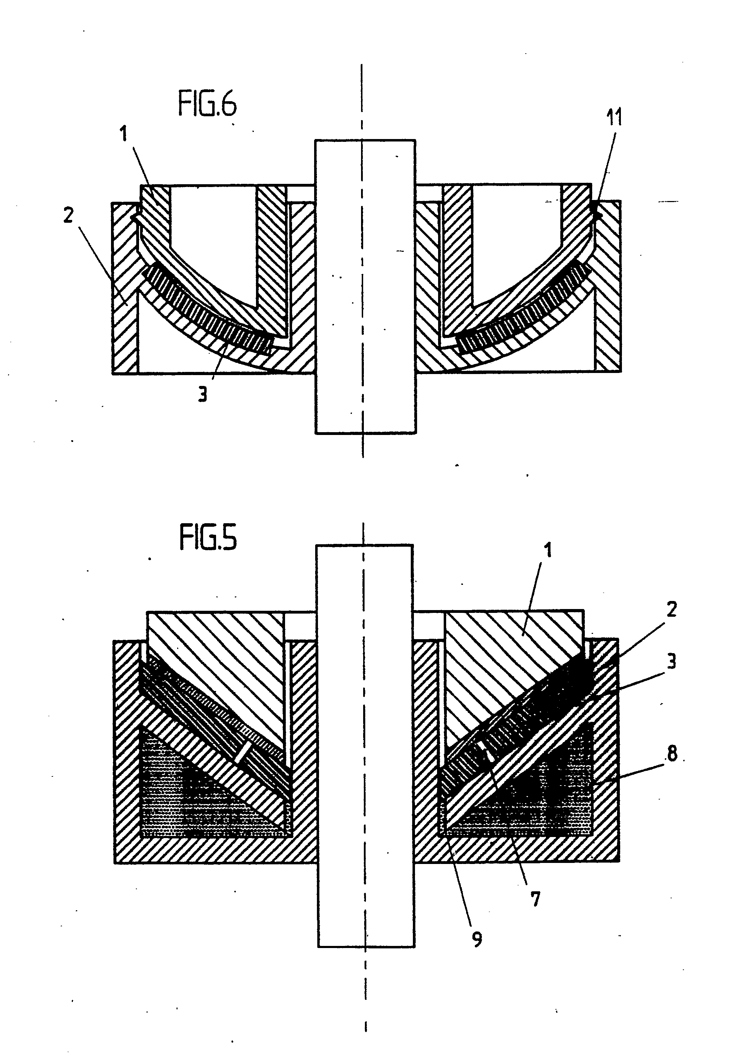

In Fig. 5 is shown an embodiment of an angular contact bearing, wherein an extra oil reservoir 8 has been provided in the bearing cup 2 behind the sliding washer 3. One or more communication holes 9 between the oil reservoir 8 and the sliding washer 3 permits the oil to circulate and to cool the bearing.

In Fig. 6 is shown further one angular contact bearing, wherein the bearing cup 2 and the rotary portion 1 are held together by means of a snap lock 11.

The invention is of course not limited to the embodiments shown but a plurality of modifications are possible within the scope of the claims.

**Claims**

1. A device in thrust or angular contact bearings of sliding bearing type incorporating a rotary portion (1), a bearing cup (2) and a lubricant supplied therebetween,
**characterized therein,**
that a sliding washer (3) of magnetisable material is provided between the rotary portion (1) and the bearing cup (2), whereby the lubricant is constituted by a magnetic fluid, and that the sliding washer (3) is magnetised in such a pattern that the lubricant is distributed over and retained on the sliding surface of the sliding washer.

2. The device as claimed in claim 1,
**characterized therein,**
that the sliding washer (3) has radial, cross-sectionally wedge-shaped grooves (4), which permit rotation in both rotational directions.

3. The device as claimed in claim 1,
**characterized therein,**
that the sliding washer (3) has radial helical grooves (6) on both sides and arranged in opposite directions on the two sides of the sliding washer (3), whereby rotation is permitted in different rotational directions on opposite sides of the sliding washer.

4. The device as claimed in claim 3,
**characterized therein,**
that the helical grooves (6) on the opposite sides of the sliding washer (3) communicate via holes (7) in the sliding washer (3), which permit circulation of the lubricant.

5. The device as claimed in one or more of the preceeding claims,
**characterized therein,**

that the sliding washer (3) is magnetised in a linear pattern with poles on the flat supporting surfaces (5).

6. The device as claimed in claim 2, 3 or 4,
**characterized therein,**
that the sliding washer (3) is magnetised in the grooves (4; 6).

7. The device according to one or more of claims 1 - 4,
**characterized therein,**
that the sliding washer (3) is magnetised in a square-pattern for distribution of the lubricant over the sliding washer surface with concentration to the intersections of the square-pattern.

8. The device as claimed in one or more of the preceeding claims,
**characterized therein,**
that an oil reservoir (8) is provided in the bearing cup (2) behind the sliding washer (3), which oil reservoir communicates with the sliding surface of the sliding washer for permitting circulation of the lubricant.

9. The device as claimed in one or more of the preceeding claims,
**characterized therein,**
that the rotary portion (1) and the bearing cup (2) are kept together by means of a snap lock (11) or the like.

3

## FIG.2

3

4

5

## FIG.1

1

3

2

3

FIG.4

FIG.3

FIG.6

1

11

2

3

FIG.5

1

2

3

8

7

9